# EUROPÄISCHE PATENTSCHRIFT

(11) **EP 3 267 549 B1**
(45) Veröffentlichungstag und Bekanntmachung des Hinweises auf die Patenterteilung: **05.08.2020**
(21) Anmeldenummer: 17181492.4
(22) Anmeldetag: 02.09.2010
(51) Int. Cl.: H02J 3/38

(54) **INSELEINHEIT EINES INSELENERGIENETZES ZUM KOMMUNIZIEREN VON ENERGIEANFRAGEN MIT EINER WEITEREN INSELEINHEIT**
ISOLATED UNIT OF AN ISOLATED ENERGY NETWORK FOR COMMUNICATING ENERGY REQUESTS WITH A FURTHER ISOLATED UNIT
UNITÉ D'ÎLOT D'UN RÉSEAU D'ÉNERGIE EN ÎLOT DESTINÉE À COMMUNIQUER DE DEMANDES D'ÉNERGIE AVEC UNE AUTRE UNITÉ D'ÎLOT

(30) Priorität: 04.09.2009 DE 102009040091
(43) Veröffentlichungstag der Anmeldung: 10.01.2018
(62) Teilanmeldung aus: 10175111.3
(73) Patentinhaber: Robert Bosch GmbH, 70442 Stuttgart (DE)
(72) Erfinder: Schmiegel, Armin Uwe, 72762 Reutlingen (DE)

(56) Entgegenhaltungen:
- EP-A1- 0 703 652
- EP-A1- 2 075 891
- HE M M ET AL: "An Architecture for Local Energy Generation, Distribution, and Sharing", ENERGY 2030 CONFERENCE, 2008. ENERGY 2008. IEEE, IEEE, PISCATAWAY, NJ, USA, 17. November 2008 (2008-11-17), Seiten 1-6, XP031442474, ISBN: 978-1-4244-2850-2

## Beschreibung

Die Erfindung bezieht sich auf eine Inseleinheit für ein Inselenergienetz, ein Inselenergienetz mit einer Inseleinheit und ein Verfahren zum Steuern eines Inselenergienetzes.

Es sind Inseleinheiten bekannt, die z.B. einen Haushalt als Lasteinheit mit Strom versorgen. Eine solche Inseleinheit weist eine Energieerzeugungseinheit, wie z.B. eine Photovoltaikanlage, auf, die Energie aus erneuerbaren Ressourcen, wie z.B. Sonneneinstrahlung, erzeugt und dem Haushalt zur Verfügung stellt. Erzeugt die Photovoltaikanlage bei z.B. guten Wetterverhältnis viel Energie, ist der Haushalt ausreichend mit Strom versorgt. Erzeugt die Photovoltaik weniger Energie als der Haushalt verbraucht, z.B. nachts oder bei schlechten Wetterverhältnisses, ist erforderlich, dass der Haushalt seinen Energiebedarf aus einem (öffentlichen) bzw. fremden Energienetz deckt. Zu diesem Zwecke weist die Inseleinheit eine Netzeinheit auf, mittels derer die Inseleinheit an das Energienetz angeschlossen werden kann, um diesem Energie zu entnehmen. Auch ermöglicht dieser Anschluss, dass die Inseleinheit erzeugte Energie an das Energienetz abgeben kann, wenn die Photovoltaikanlage mehr Energie erzeugt als durch den Haushalt verbraucht wird.

Eine solche Inseleinheit weist den Nachteil auf, dass der Austausch von Energie zwischen Inseleinheit und Energienetz aufwendig ist. Insbesondere ist jeder Energiefluss zwischen Inseleinheit und Energienetz zu bilanzieren, was u.a. aufwendige Berechnungsverfahren mit sich bringt.

Aus US 2004/0263116 A1 ist ein verteiltes Energiespeichersystem bekannt. Dieses Energiespeichersystem umfasst einerseits Verbraucher, die über eine Energiespeichereinheit mit dem öffentlichen Stromnetz verbunden sind, andererseits Energieerzeuger, die ebenfalls über eine Speichereinheit mit dem öffentlichen Energienetz verbunden sind. Nachteilig an diesem System ist, dass zur Übertragung von Energie von den Energieerzeugern an die Verbraucher stets das öffentliche Netz in Anspruch genommen werden muss. Dies hat zur Folge, dass in Spitzenzeiten in Bezug auf Stromerzeugung oder Stromverbrauch, insbesondere gegen Ende der Spitzenzeiten, wenn die Energiespeichereinheiten im Bereich der Verbraucher erschöpft oder die Energiespeichereinheiten im Bereich der Erzeuger gefüllt sind, eine Überlastung des Netzes erfolgen kann bzw. das öffentliche Netz entsprechend für solche Spitzenlasten dimensioniert sein muss. Dies führt im Ergebnis zu Instabilitäten im öffentlichen Netz und ungünstigen Dimensionierungsanforderungen für das öffentliche Netz. Es ist eine Aufgabe der vorliegenden Erfindung, diese Nachteile zu Überwinden.

Aus US 2002/0036430 A1 ist ein lokales Bereichsnetz für verteilte Energieerzeugung mittels Brennstoffzellen bekannt. Bei diesem System wird das Problem der Kopplung von Wärmeerzeugung und elektrischer Energieerzeugung in Brennstoffzellen adressiert und die damit verbundene Überproduktion von elektrischer Energie in lokalen Haushalten, die eine Brennstoffzelleneinheit zur Versorgung aufweisen, angegangen. Das Dokument schlägt hierzu vor, mehrere Haushalte über eine entsprechende lokale Steuerungslogik miteinander energietechnisch zu koppeln, um hierdurch die Übertragung von elektrischer Energie aus einem Haushalt, der diesbezüglich einen Überschuss produziert in das Energienetz zu ermöglichen. US 2002/0036430 A1 befasst sich damit mit einer spezifischer Problematik aus dem Bereich der Brennstoffzellentechnik und schlägt hierzu eine Lösung vor. Nachteilig an dieser Lösung ist, dass sich diese zwar in spezifischer Weise für den Fall einer Überproduktion von elektrischer Energie für den Einzelhaushalt sinnvoll und wirtschaftlich nutzen lässt, allerdings insbesondere dann, wenn der Haushalt eine Wärmeerzeugung nicht oder nur in geringem Ausmaß benötigt, die mit Brennstoffzellen verbundenen Nachteile in der bereits bekannten Weise auftreten und entweder die überschüssige Wärme, die im Zuge der elektrischen Energieerzeugung anfällt, nutzlos abgeführt werden muss oder aber die Brennstoffzelle teilweise oder vollständig in ihrem Betrieb gedrosselt werden muss und elektrische Energie aus dem Netz bezogen werden muss.

Auch dies hat zur Folge, dass durch das vorgeschlagenen System erhebliche Spitzenlasten, insbesondere saisonal oder tageszeitabhängig bedingte Spitzenlasten durch eine Energieübertragungsleistung über das öffentliche Netz kompensiert werden müssen und folglich die zuvor erläuterten Nachteile hinsichtlich Instabilität des Netzes und Dimensionierung des Netzes auftreten.

In dem Artikel "An Architecture for Local Energy Generation, Distribution, and Sharing", MIKE et al. IEEE Energy 2030, Atlanta, Georgia, USA, 17-18 November 2008 wird schließlich ein Energienetzwerksystem vorgeschlagen, welches eine intelligente Leistungsschalteinheit vorsieht, die lokal zwischen einem Energieerzeuger, einer Energiespeichereinheit und einer Last eingebunden ist. Die intelligente Leistungsschalteinheit ist über ein Leistungs- und Kommunikationsinterface mit einem Energienetzwerk verbunden. Mit dem so offenbarten System wird zwar prinzipiell die Möglichkeit geschaffen, einzelne Energieerzeuger mit lokalen Energieverbrauchern und Energiespeichereinheiten intelligent zu verschalten. Allerdings tritt auch hier die Problematik auf, dass die so definierten einzelnen Einheiten in ihren Verbrauchs-, Erzeugungs- und Speicherkapazitäten begrenzt sind und folglich bei länger andauernden, einheitlichen Zuständen ein für hohe Übertragungskapazitäten ausgelegtes Netzwerk notwendig ist, um eine sichere Energieversorgung bereit zu stellen. Gegenüber dem so bekannten System liegt der Erfindung die Aufgabe zugrunde, eine höhere Stabilität eines Energieversorgungssystems zu ermöglichen und zugleich eine in der Dimensionierung vorteilhafte Ausgestaltung des Energieversorgungsnetzwerks zu erlauben.

Aus EP 2075891 A1 ist eine Inseleinheit für ein Inselenergienetz gemäß der Präambel von Anspruch 1 offenbart.

Es ist Aufgabe der Erfindung eine Inseleinheit zur Verfügung zu stellen, die oben genannte Nachteile vermeidet und einen Zugriff auf ein Fremdenergienetz bzw. ein öffentliches Energienetz reduziert.

Erfindungsgemäß wird die Aufgabe durch eine Inseleinheit für ein Inselenergienetzsystem gelöst, welche aufweist: eine Energieerzeugungseinheit, insbesondere eine Photovoltaik-Einheit, zum Erzeugen von Energie aus erneuerbaren Ressourcen, eine Energiespeichereinheit zum Speichern von Energie, eine Lastanschlusseinheit zum Verbinden der Inseleinheit mit einer Lasteinheit zum Verbrauchen von Energie, eine Netzeinheit, insbesondere eine Wechselrichtereinheit, zum Verbinden der Inseleinheit mit einem Energienetz, zum Entnehmen von Energie aus dem Energienetz und zum Zuführen von Energie in das Energienetz, und eine Schnittstelleneinheit zum Kommunizieren einer Energieentnahmeanfrage und/oder einer Energiespeicheranfrage mit einer zweiten Inseleinheit.

Unter einer Energieerzeugungseinheit ist hierbei insbesondere eine von äußeren Umwelteinflüssen abhängige Energieerzeugungseinheit zu verstehen, die also hinsichtlich ihres Energieertrags nicht unmittelbar steuerbar sondern allenfalls drosselbar ist, wie beispielsweise eine Photovoltaikanlage, deren Energieertrag im unmittelbaren Zusammenhang mit dem einfallenden Sonnenlicht steht. Andere Energieerzeugungseinheiten wie brennstoffbetriebene Generatoren, Brennstoffzellen oder andere Kraftwerkstechniken fallen nicht unter die der Erfindung zugrundeliegende Problematik.

Der Erfindung liegt die Idee zu Grunde, dass ein Inselenergienetz, welches eine Vielzahl von Inseleinheiten aufweist, den Energiebedarf und/oder Energieüberschuss zwischen den Inseleinheiten kommuniziert und einen entsprechenden Energiefluss veranlassen kann, so dass ein Zugriff auf das (öffentliche) Energienetz vermieden werden kann. Ein Vorteil der erfindungsgemäßen Schnittstelleneinheit einer erfindungsgemäßen Inseleinheit besteht darin, dass diese Anfragen zur Speicherung und/oder Entnahme von Energie zwischen den der Inseleinheit bekannten Nachbarinstallationen, d.h. mit der Inseleinheit in Kommunikation stehenden zweiten, dritten etc. Inseleinheiten, ausgetauscht werden - ohne dabei auf eine zentrale Steuereinheit zurückgreifen zu müssen. Erfindungsgemäß kann somit auf eine zentrale Steuereinheit innerhalb des Inselenergienetzes verzichtet werden.

Ein weiterer Vorteil liegt darin, dass die Kommunikation zwischen den Inseleinheiten eine Beschleunigung in der Bearbeitung der jeweiligen Anfragen bedeutet: Anstatt dass eine zentrale Steuereinheit eine Anfrage an eine Vielzahl von Inseleinheiten sendet und die entsprechenden Antworten verwalten muss, bis schließlich eine Inseleinheit zur Bearbeitung der Anfrage ausgewählt ist, wird erfindungsgemäß die Energieentnahmeanfrage bzw. die Energiespeicheranfrage von einer Inseleinheit an die nächste gesendet bzw. weitergeleitet und diese entscheidet daraufhin selbständig, ob sie die Anfrage bearbeiten kann oder nicht. Die Bearbeitung der Energieentnahme bzw. der Energiespeicherung kann so erfindungsgemäß schneller und einfacher ausgeführt werden.

Unter einer Inseleinheit ist hierbei eine im Prinzip autarke Baueinheit zu verstehen, die eine Energieerzeugungseinheit und Energieverbraucher aufweist, die direkt innerhalb der Baueinheit miteinander verbunden sind, wie beispielsweise in einem Ein- oder Mehrfamilienhaus mit einer hauseigenen Photovoltaikanlage. Erfindungsgemäß ist diese Inseleinheit zwar auch zur Einspeisung und zur Entnahme von Energie an das öffentliche Netz angeschlossen, Energie kann aber auch und in bevorzugter Weise direkt durch eine innerhalb der Inseleinheit ausgebildete Übertragungsleitung von der Energieerzeugungseinheit an eine Lasteinheit, also insbesondere einen Verbraucher innerhalb der Inseleinheit, der an die Lastanschlusseinheit angeschlossen ist, oder an eine Energiespeichereinheit innerhalb der Inseleinheit übertragen werden. Diese Übertragung erfolgt ohne Nutzung des öffentlichen Netzes. Hierdurch wird es möglich, Spitzenlasten in dem an die Schnittstelleneinheit angeschlossenen öffentlichen Netz wirksam zu vermeiden.

Bevorzugt ist die Schnittstelleneinheit ausgestaltet: zum Empfangen der Energieentnahmeanfrage zur Entnahme von Energie aus der Inseleinheit von der zweiten Inseleinheit, zum Senden der Energieentnahmeanfrage zur Entnahme von Energie aus der zweiten Inseleinheit an die zweite Inseleinheit, zum Empfangen der Energiespeicheranfrage zur Speicherung von Energie in der Inseleinheit von der zweiten Inseleinheit, und/oder zum Senden der Energiespeicheranfrage zur Speicherung von Energie in der zweiten Inseleinheit an die zweite Inseleinheit. Vorteilhaft wird erreicht, dass die Inseleinheit und die zweite Inseleinheit einen Energiebedarf bzw. einen Energieüberschuss untereinander ausgleichen können. Je nachdem, ob zu viel oder zu wenig Energie in der Inseleinheit bzw. der zweiten Inseleinheit vorhanden ist, kann eine entsprechende Information an die jeweilige andere Inseleinheit gesendet werden, die den Energiebedarf bzw. den Energieüberschuss ausgleichen kann. Erfindungsgemäß wird so eine sehr einfache Lösung einer Situation erreicht, in der eine Inseleinheit einen Energieüberschuss oder einen Energiebedarf hat ohne dass eine aufwändige und zeitintensive Kommunikation über eine zentrale Steuereinheit erforderlich ist. Durch diese Art der Kommunikation und Energieübermittlung zwischen mehreren Inseleinheiten ist es erfindungsgemäß insbesondere möglich, dass eine Energie im Überschuss produzierende Inseleinheit diese Energie an eine unmittelbar benachbart liegende Inseleinheit oder an eine in einem Nachbarverbund, der mehrere räumlich benachbarte (beispielsweise in einem Wohngebiet einer Größe von einem Quadratkilometer) Inseleinheiten umfasst, liegende Inseleinheit übermittelt und diese Energie dort in der Energiespeichereinheit gespeichert wird. Dies erhöht in entscheidender Weise die Flexibilität der Energiespeicherung, da entgegen des Standes der Technik ein Transfer von Energie in das Netz und an andere Inseleinheiten auch dann möglich ist, wenn diese Energie nicht durch andere Verbraucher des öffentlichen Netzes verbraucht wird. Die Stabilität des Netzes kann hierdurch entscheidend erhöht werden. Zudem kann durch Inseleinheitenverbünde das Einspeiseverhalten optimiert werden und die Belastung des öffentlichen Netzes in der Übertragungskapazität über Ferndistanzen reduziert werden. Schließlich wird der Handel mit Energie dadurch erleichtert und befördert, dass durch die Erfindung die technische Möglichkeit bereitgestellt wird, auch in Energiespeichereinheiten zu investieren und deren Speicherkapazitäten gegen Entgelt anderen Nutzern zur Verfügung zu stellen.

Der Erfindung liegt dabei die Erkenntnis zu Grunde, dass eine Entlastung und Stabilisierung des öffentlichen Netzes auch und insbesondere dadurch erreicht werden kann, dass die Energieübertragungsdistanzen reduziert werden, indem räumlich benachbarte Speicher, Erzeuger und Verbraucher in intelligenter Weise für einen gegenseitigen Energieaustausch miteinander gekoppelt werden. In gleicher Weise ist demzufolge zu verstehen, dass Energie durch eine entsprechende Energieübermittlung und Kommunikation zwischen zwei Inseleinheiten auch aus der Speichereinheit einer Inseleinheit an die Lasteinheit einer anderen Inseleinheit übertragen werden kann und die Inseleinheiten hierzu entsprechend ausgebildet sind.

Bevorzugt ist die Schnittstelleneinheit zum Weiterleiten der Energieentnahmeanfrage und/oder der Energiespeicheranfrage an die zweite Inseleinheit ausgestaltet. Vorteilhaft wird erreicht, dass selbst in dem Falle, in dem sich zwei Inseleinheiten gegenseitig nicht in Energiebedarf, Energiespeicherkapazität oder Energieüberschuss aushelfen können, eine dritte Inseleinheit des Inselenergienetzes eingeschaltet werden kann, um den Energiebedarf bzw. Energieüberschuss auszugleichen. Die Kommunikation des erfindungsgemäßen Inselenergienetzes ohne zentrale Steuereinheit wird so weiter vereinfacht.

Bevorzugt ist die Inseleinheit ferner ausgestaltet, um die Energieentnahmeanfrage und/oder Energiespeicheranfrage von einer Verwaltungseinheit des Inselenergienetzes zu empfangen. In einer bevorzugten Ausführungsform ist die Verwaltungseinheit eine Schnittstelle zwischen Inselenergienetzwerken. Vorteilhaft wird erreicht, dass eine Bündelung von einer (oder mehreren) Energiespeicheranfrage bzw. einer Energieentnahmeanfrage in der Verwaltungseinheit stattfindet, wobei die Verwaltungseinheit die Anfrage an eine, bevorzugt genau eine, Inseleinheit des Inselenergienetzes sendet bzw. weiterleitet. Diese Inseleinheit entscheidet dann, ob sie der Anfrage entsprechen kann und leitet die Anfrage gegebenenfalls an eine oder mehrere Inseleinheiten, wie oben beschrieben, weiter. Die Verwaltungseinheit bildet so bevorzugt ein Kommunikationsglied in der Kommunikationskette von Inseleinheiten.

Bevorzugt ist die Energiespeichereinheit ausgestaltet, um Energie in Antwort auf eine Energiespeicheranfrage zu speichern. Bevorzugt ist die Energiespeichereinheit ausgestaltet, um diejenige Energie zu speichern, die in der Inseleinheit erzeugt wurde, die die Energiespeicheranfrage gesendet hat. Erfindungsgemäß wird der Vorteil erreicht, dass die Inseleinheit nicht nur auf die eigene Energiespeichereinheit, sondern auch auf Energiespeichereinheiten der zweiten, dritten etc. Inseleinheiten virtuell zurückgreifen kann, um einen Überschuss an Energie zu speichern und bevorzugt nicht dem (öffentlichen) Energienetz zur Verfügung zu stellen. Als weiterer Vorteil ist darin zu sehen, dass die Bilanzierung zwischen Inselenergienetz und öffentlichem Energienetz vereinfacht wird, da ein Energieüberschuss bzw. Energiebedarf weitgehend innerhalb des Inselenergienetzes ausgeglichen wird.

Bevorzugt ist die Inseleinheit ausgestaltet, um Energie, insbesondere aus der Energiespeichereinheit und/oder von der Energieerzeugungseinheit, in Antwort auf eine Energieentnahmeanfrage an das Inselenergienetz abzugeben. Vorteilhaft wird eine virtuelle Bereitstellung der Energiespeichereinheit bzw. der Energieerzeugungseinheit der Inseleinheit für die zweite, dritte etc. Inseleinheit innerhalb des Inselenergienetzes erreicht. Das Inselenergienetz ist somit erfindungsgemäß weitgehend autark vom öffentlichen Energienetz und gleicht einen Energieüberschuss bzw. Energiebedarf unter den Inseleinheiten selbständig aus.

Bevorzugt ist die Inseleinheit ausgestaltet, um eine Identifikationsinformation, die die zweite Inseleinheit identifiziert, von dem Energienetz zu empfangen, und die Schnittstelleneinheit ausgestaltet, um mit der identifizierten zweiten Inseleinheit zu kommunizieren. In dieser Ausführungsform einer direkten Konfiguration wird der Inseleinheit durch das Inselenergienetz und/oder die Verwaltungseinheit mitgeteilt, mit welchen zweiten, dritten etc. Inseleinheiten sie kommunizieren soll, d.h. sie sich virtualisieren soll. Erfindungsgemäß kann so seitens des Inselenergienetzes eine Auswahl von Inseleinheiten innerhalb des Inselenergienetzes als virtuelles Kraftwerk eingerichtet werden. Dies ist insbesondere von Vorteil, wenn ein bestimmter Satz von Inseleinheiten einen solchen Energiebedarf und - überschuss aufweist, dass sich die einzelnen Inseleinheiten dieses virtuellen Kraftwerkes besonders gut als jeweiliger Ausgleich eignen. Eine Zusammenstellung eines virtuellen Kraftwerks erfolgt bevorzugt auf Basis von einem Referenzzeitraum, Tages-, Wochentags-, Monats- oder Jahreszeitinformationen, Wetterinformationen etc.

Bevorzugt ist die Inseleinheit ausgestaltet, um eine Identifikationsinformationsanfrage an das Inselenergienetz zu senden. In dieser bevorzugten Ausführungsform initiiert die Inseleinheit eine aktive Suche im Inselenergienetz bzw. in einem vorgegebenen Inselenergiesubnetz: Die Inseleinheit sendet an zumindest eine weitere Inseleinheit ein Identifikationsinformationsanfragesignal, um sich mit der jeweiligen Inseleinheit in Kommunikation zu setzen und eine Virtualisierung zu erlauben. Ferner ist es bevorzugt, dass die Inseleinheit die Identifikationsinformationsanfrage an die Verwaltungseinheit sendet, um von dieser die Identifikationsinformation zu empfangen. Ein solcher Prozess ist insbesondere vorteilhaft, wenn zu einem bestehenden Inselenergienetz eine neue Inseleinheit hinzugefügt wird, die sich innerhalb des Inselenergienetzes zu erkennen gibt und eine beabsichtigte Virtualisierung anzeigt. Der Austausch der Identifikation über Anfrage oder Abfrage kann zudem dazu dienen, energieübertragungsbezogene Dienstleistungen, wie einen Verbrauch von Energie in einer Inseleinheit aus einer Energieerzeugung einer anderen Inseleinheit, eine Speicherung von Energie in einer Inseleinheit aus einer anderen Inseleinheit, zu dokumentieren und einer Entgeltrechnung zuzuführen.

In einem weiteren Aspekt bezieht sich die Erfindung auf ein Inselenergienetz einer erfindungsgemäßen Inseleinheit und einer Verwaltungseinheit. Bevorzugt weist das Inselenergienetz ferner eine zweite Inseleinheit auf, die die Merkmale der erfindungsgemäßen Inseleinheit aufweist.

In einem weiteren Aspekt bezieht sich die Erfindung auf ein Verfahren zum Steuern eines erfindungsgemäßen Inselenergienetzes mit dem Schritt eines Kommunizierens der Energieentnahmeanfrage und/oder Energiespeicheranfrage zwischen der Inseleinheit und der zweiten Inseleinheit. Bevorzugt weist das erfindungsgemäße Verfahren den Schritt eines Sendens einer Energieentnahmeanfrage und/oder Energiespeicheranfrage von der Verwaltungseinheit an die Inseleinheit auf. Ferner weist das erfindungsgemäße Verfahren bevorzugt im Schritt des Kommunizierens einen oder mehrere der folgenden Schritte auf: Empfangen der Energieentnahmeanfrage zur Entnahme von Energie aus der Inseleinheit an die Inseleinheit von der zweiten Inseleinheit, Senden der Energieentnahmeanfrage zur Entnahme von Energie aus der zweiten Inseleinheit von der Inseleinheit an die zweite Inseleinheit, Empfangen der Energiespeicheranfrage zur Speicherung von Energie in der Inseleinheit an der Inseleinheit von der zweiten Inseleinheit, Senden der Energiespeicheranfrage zur Speicherung von Energie in der zweiten Inseleinheit von der Inseleinheit an die zweite Inseleinheit, und/oder Weiterleiten der Energieentnahemanfrage und/oder der Energiespeicheranfrage von der Inseleinheit an die zweite Inseleinheit. Die unter Bezugnahme auf die erfindungsgemäße Inseleinheit erläuterten Vorteile und Effekte gelten in gleicher Weise.

In einer bevorzugten Ausführungsform weist das erfindungsgemäße Verfahren ferner den Schritt auf: Auswählen der Inseleinheit, an die die Verwaltungseinheit die Energieentnahmeanfrage und/oder Energiespeicheranfrage sendet, gemäß einer Priorisierungsliste, die eine priorisierte Rangfolge der Inseleinheit und der zweiten Inseleinheit repräsentiert, und/oder gemäß einer Prädiktionsliste, die eine prädiktionierte Rangfolge der Inseleinheit und der zweiten Inseleinheit repräsentiert. Erfindungsgemäß kann so eine bestimmte Reihenfolge von Inseleinheiten innerhalb des Inselenergienetzes bestimmt werden, innerhalb derer die Anfragen zu senden bzw. weiterzuleiten sind. Bevorzugt befindet sich die Inseleinheit auf der Priorisierungsliste vor der zweiten Inseleinheit, insbesondere wenn die Inseleinheit geeignet ist, günstiger, zuverlässiger, effizienter Energie zu erzeugen, als es die zweite Inseleinheit ist. Bevorzugt befindet sich die Inseleinheit auf der Prädiktionsliste vor der zweiten Inseleinheit, insbesondere wenn auf Basis eines Referenzzeitraumes oder von Daten zu Wetter, Uhrzeit, Tag, Woche, Jahreszeit bekannt ist, dass die Inseleinheit häufiger als die zweite Inseleinheit geeignet ist, einen Energieüberschuss bzw. einen Energiebedarf auszugleichen. Eine Weiterleitung von Anfragen entlang einer Kommunikationskette von Inseleinheiten kann so reduziert und eine schnellere Lösung eines Energiebedarfes bzw. Energieüberschusses bereitgestellt werden. Diese Fortbildung ermöglicht es insbesondere, die Energieübertragung und diesbezügliche Kommunikation von Entnahme- und Speicheranfragen zwischen ausgewählten Inseleinheiten in einer bestimmten Reihenfolge durchzuführen. So kann bevorzugt Energie zwischen unmittelbar benachbarten Inseleinheiten ausgetauscht werden und nur in dem Falle, dass eine benachbarte Inseleinheit nicht über ausreichend Energieüberschuss oder gespeicherte Energie für eine Abgabe oder nicht über genügend Energiebedarf oder Speicherkapazität für eine Aufnahme von Energie verfügt, eine entfernter liegende Inseleinheit ausgewählt werden, von der Energie entnommen oder an die Energie abgegeben wird. Diese Priorisierungs- oder Prädiktionsliste erzielt somit durch Minimierung der Übertragungsdistanzen eine signifikante Entlastung und Stabilisierung des öffentlichen Netzes.

Neben diesem Vorteil kann eine Inseleinheit aber auch eine Priorisierung oder Prädiktion in solcher Weise ausführen, dass typischerweise sich azyklisch verhaltende Inseleinheiten für den bevorzugten Energieaustausch vorgesehen werden. So kann beispielsweise eine Inseleinheit mit einer Photovoltaikanlage mit einer Inseleinheit mit einer Windenergieanlage bevorzugt priorisiert werden, wenn man die meteorologische Annahme zu Grunde legt, dass sonnenreiche Tage tendenziell windarm und windreiche Tage tendenziell sonnenarm sind.

Bevorzugt weist das erfindungsgemäße Verfahren ferner den Schritt eines Auswählens der zweiten Inseleinheit, mit der die Inseleinheit kommuniziert, gemäß einer Priorisierungsliste, die eine priorisierte Rangfolge der zweiten Inseleinheit und einer dritten Inseleinheit repräsentiert, und/oder gemäß einer Prädiktionsliste, die eine prädiktionierte Rangfolge der zweiten Inseleinheit und einer dritten Inseleinheit repräsentiert. Die zuvor erläuterten Vorteile einer Priorisierungs- und/oder Prädiktionsliste gelten analog: Mit Hilfe von Erfahrungswerten, Wetterinformationen oder anderen Informationen, die die Energieerzeugung und Energieverbrauch durch eine einzelne Inseleinheit innerhalb des erfindungsgemäßen Inselenergienetzes repräsentieren, und entsprechende Priorisierungs- und Prädiktionslisten, wird vorteilhaft erreicht, dass der Kommunikationsaufwand zwischen einzelnen Inseleinheiten reduziert werden kann, indem eine gezielte Sendung oder Weiterleitung der Anfrage ausgeführt wird.

Insbesondere ist für die Priorisierungsliste bevorzugt, die priorisierte Rangfolge der Energieentnahmeanfrage durch das Inselenergienetz selbständig generiert wird. Die Priorisierung erfolgt bevorzugt durch Daten einer Abfrage von Parametern und Statusmerkmalen (wie z.B. momentane Energieerzeugung, momentaner Verbrauch der Lasteinheit) einer Inseleinheit oder auch mehrerer Inseleinheiten, die als Subinselnetz zusammengefasst sein können. Bevorzugt ist ferner, dass die Inseleinheit (und analog, die zweite, dritte etc. Inseleinheit) ausgestaltet ist, um vorzugeben, welche Energiereserven sie bereit sind, an das Inselenergienetz abzugeben (z.B. max. 35 % der überschüssigen aktuell erzeugten PV Energie bzw. Batteriekapazität, wenn Batterieladezustand > 50%). Bevorzugt sind die die Vorgaben zeitabhängig. In einer entsprechend bevorzugten Ausführungsform ist die Inseleinheit ausgestaltet, um innerhalb des Inselenergienetzes in einem Sommer-/Wintermodus und/oder Vormittags-/Mittags-/Abendmodus betrieben zu werden.

Bevorzugt werden die im Bezug auf die Priorisierungsliste erläuterten Mechanismen zur Erstellung der Liste analog auf die Prädiktionsliste angewendet.

Erfindungsgemäß kann durch die Virtualisierung der Inseleinheiten innerhalb eines Inselenergienetzes eine besonders hohe Effizienz in der Erzeugung und dem Verbrauch von Energie erreicht werden. Erfindungsgemäß wird dies durch intelligente Kleinstanlagen von Inseleinheiten ermöglicht, die ihrerseits Kenntnisse bei der Installation oder der Konfiguration erhalten, um sich mit anderen Kleinstanlagen des Inselenergienetzes zu virtualisieren.

Ausführungsformen der Erfindung werden im Folgenden anhand von Figuren erläutert, wobei
Fig. 1 eine Inseleinheit für ein Inselenergienetz zeigt;
Fig. 2 ein Inselenergienetz mit Inseleinheiten und einer zentralen Steuereinheit zeigt;
Fig. 3 ein weiteres Inselenergienetz mit weiteren Inseleinheiten zeigt;
Fig. 4 eine mittlere Energieerzeugung und - verbrauch zeigt;
Fig. 5 ein Zählerkonzept zeigt;
Fig. 6 eine Schaltung einer erfindungsgemäßen Inseleinheit zeigt; und
Fig. 7 ein Display einer Inseleinheit zeigt.

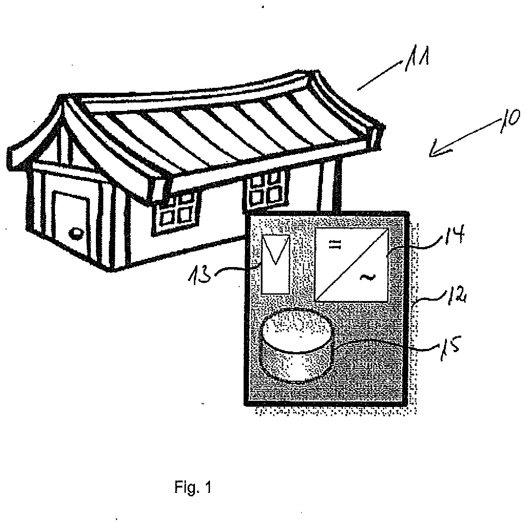

In Figur 1 ist eine Inseleinheit mit einer Lasteinheit 11 und einem Inselkraftwerk 12 gezeigt. Das Inselkraftwerk 12 weist eine Energieerzeugungseinheit 13, eine Netzeinheit, insbesondere Wechselrichtereinheit, 14 und eine Energiespeichereinheit 15 auf. Die Energieerzeugungseinheit 13 ist bevorzugt eine Photovoltaikanlage, wobei die Erfindung nicht auf die Energieerzeugung durch Sonnenenergie beschränkt ist, sondern ebenso gut Energie aus Wind, Biogas oder anderen erneuerbaren Ressourcen gewinnen kann.

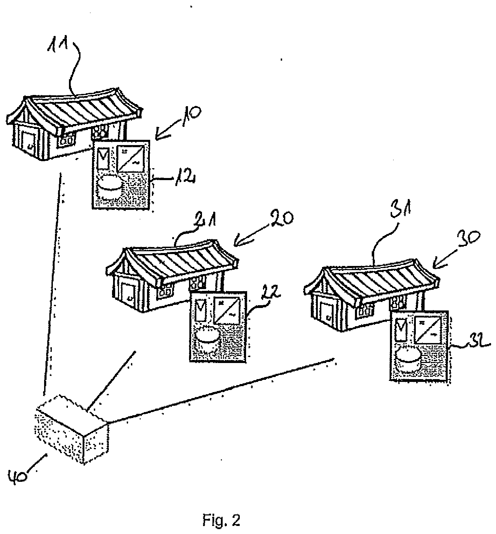

In Figur 2 ist ein Inselenergienetz mit einer Vielzahl von Inseleinheiten der Figur 1 und einer zentralen Steuereinheit 40 dargestellt. Jede der weiteren Inseleinheiten 20, 30 weist identische Komponenten wie die Inseleinheit 10 auf. Die Steuereinheit 40 generiert und kommuniziert Energieentnahmeanfragen und Energiespeicheranfragen mit jeder einzelnen Inseleinheit. Eine Kommunikation zwischen den Inseleinheiten 10, 20, 30 findet in dem Inselenergienetz der Figur 2 nicht statt. Um einen Energiebedarf oder einen Energieüberschuss in der Inseleinheit 10 zu lösen, ist erforderlich, dass die Inseleinheit 10 eine entsprechende Anfrage an die zentrale Steuereinheit 40 sendet, die diese wiederum an Inseleinheiten 20, 30 weiterleitet. Ist zumindest eine der Inseleinheiten 20, 30 in der Lage, den Energiebedarf bzw. -überschuss der Inseleinheit 10 zu lösen, sendet sie einen entsprechendes Signal an die zentrale Steuereinheit 40, die den Energiefluss zwischen den Inseleinheiten 10, 20, 30 daraufhin entsprechend koordiniert. Die Kommunikation zwischen zentraler Steuereinheit 40 und Inseleinheiten 10, 20, 30 ist entsprechend der Kommunikationsverzweigung jeweils von und zu der zentralen Steuereinheit 40 aufwendig und umständlich.

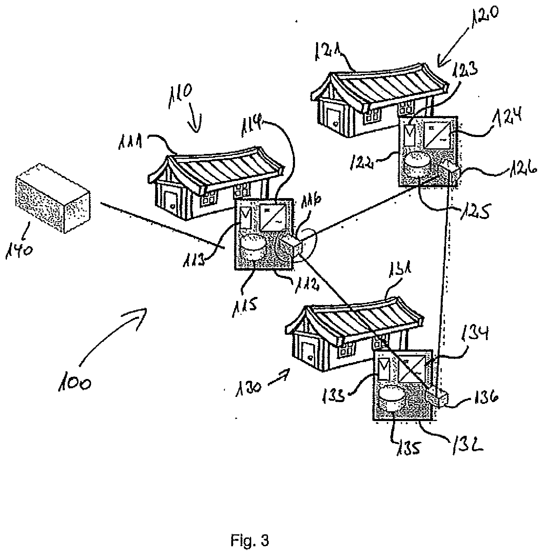

Erfindungsgemäß wird die Kommunikation und damit die Lösung des Energieüberschusses bzw. des Energiebedarfes durch ein Inselenergienetz gelöst, wie es beispielhaft in Figur 3 dargestellt ist. Figur 3 zeigt eine (erste) Inseleinheit 110, eine zweite Inseleinheit 120 und eine dritte Inseleinheit 130. Die Inseleinheit 110 weist eine Lasteinheit 111 auf, die die erzeugte, gespeicherte und/oder dem Energienetz entnommene Energie verbraucht. Die Inseleinheit 110 weist ferner ein Inselkraftwerk 112 auf. Das Inselkraftwerk 112 weist beispielsweise eine Photovoltaikanlage 113 auf. Die Energieerzeugungseinheit 113 kann aber auch jedwede andere Anlage sein, die Energie aus erneuerbaren Ressourcen erzeugen kann. Das Inselkraftwerk 112 weist ferner einen Wechselrichter 114 und einen Energiespeicher 115 auf. Erfindungsgemäß weist die Inseleinheit 110 eine Schnittstelleneinheit 116 auf, die zum Kommunizieren von Energieentnahmeanfragen und/oder Energiespeicheranfragen mit anderen Inseleinheiten, wie z.B. erfindungsgemäßen Inseleinheiten 120, 130, ausgestaltet ist. Ferner ist aber auch möglich, dass die erfindungsgemäße Inseleinheit 110 mit konventionellen Inseleinheiten kommuniziert.

Die Inseleinheiten 120 und 130 sind in der Ausführungsform der Figur 3 mit analogen Einheiten wie die der Inseleinheit 110 ausgestattet. Inseleinheit 120 weist eine Lasteinheit 121, ein Inselkraftwerk 122, eine Energieerzeugungseinheit 123, eine Netzeinheit 124, eine Energiespeichereinheit 125 und eine Schnittstelleneinheit 126 auf. Die Inseleinheit 130 weist eine Lasteinheit 131, ein Inselkraftwerk 132, eine Energieerzeugungseinheit 133, eine Netzeinheit 134, eine Energiespeichereinheit 135 und eine Schnittstelleneinheit 136 auf.

Das erfindungsgemäße Inselenergienetz der Figur 3 weist ferner eine Verwaltungseinheit 140 auf. Die Verwaltungseinheit 140 kommuniziert bevorzugt mit der ersten Inseleinheit 110. In gleicher Weise ist es aber auch möglich, dass die Verwaltungseinheit 140 mit zumindest einer der Inseleinheiten 120 und 130 kommuniziert. Der Betrieb des erfindungsgemäßen Inselenergienetzes 100 ist im Folgenden beschrieben.

Die Inseleinheit 110 (und in gleicher Weise die Inseleinheiten 120, 130) erzeugt mittels der Photovoltaikanlage 113 Energie aus Sonnenlicht. Bei direkter Sonneneinstrahlung bei besonders guten Wetterbedingungen oder im Sommer auf der Nordhalbkugel der Erde erzeugt die Photovoltaikanlage 113 sehr effizient Energie. Wird in der Inseleinheit 110 mehr Energie durch die Photovoltaikanlage 113 erzeugt, als die Lasteinheit 111 (z.B. ein Haushalt oder ein kleinerer Betrieb) verbraucht, steht ein Energieüberschuss bereit. Dieser Energieüberschuss kann beispielsweise in die Energiespeichereinheit 115 überführt werden, um ein Akkuelement der Speichereinheit 115 aufzuladen. Auch kann der Energieüberschuss über den Wechselrichter 114 einem Energienetz, z.B. einem öffentlichen Energienetz, zugeführt werden. Der Wechselrichter 114 ist bevorzugt in der Lastanschlusseinheit der Inseleinheit 110 enthalten, über die die Lasteinheit 111 mit der Inseleinheit verbunden ist. Erzeugte Energie kann also in dem Speicher 115 gespeichert werden, in das Energienetz mittels des Wechselrichters 114 abgeführt und durch die Lasteinheit mittels des Wechselrichters 114 bzw. der Lastanschlusseinheit verbraucht werden.

Übersteigt nun die in der Photovoltaikanlage 113 erzeugte Energie den Energieverbrauch der Lasteinheit 114, wird zunächst der Energieüberschuss in die Speichereinheit 115 geleitet, um diese (nahezu) vollständig aufzuladen. Die Speichereinheit 115 dient so, beispielsweise nachts, bei schlechtem Wetter, bei Stromausfall etc., als Notreserve, um den Energiebedarf der Lasteinheit 111 zu decken. Besteht nach der Zuführung von erzeugter Energie zu der Lasteinheit 111 und der Aufladung des Speicherelementes 115 weiterhin ein Energieüberschuss, so kann dieser entweder dem (öffentlichen) Energienetz zugeführt und entsprechend bilanziert werden, oder - erfindungsgemäß - an eine (oder mehrere) Inseleinheit 120, 130 des Inselenergienetzes abgegeben werden. Die Abgabe kann dabei erfolgen, um den Energiebedarf einer anderen Inseleinheit 120, 130 zu decken, oder auch um die Energiespeichereinheiten 125, 135 der anderen Inseleinheiten 120, 130 zu laden. Die Inseleinheit 110 ist so erfindungsgemäß ausgestaltet, auf virtuelle Lasteinheiten 121, 131 und virtuelle Speichereinheiten 125, 135 zurückzugreifen und Energie an diese abzugeben. Ein Energiebedarf in den Inseleinheiten 120, 130 kann erfindungsgemäß so gedeckt werden, ohne auf das öffentliche Energienetz zurückgreifen zu müssen, welches Energie teurer, ineffizienter und ökologisch bedenklicher bereitstellt.

Ein Energiebedarf in Inseleinheit 110 kann beispielsweise dadurch entstehen, dass die Photovoltaikanlage 113 weniger Energie erzeugt, als die Lasteinheit 111 verbraucht. Eine solche Situation kann beispielsweise dadurch entstehen, dass die Photovoltaikanlage 113 aufgrund von schlechten Wetterbedingungen, im Winter auf der Nordhalbkugel der Erde, oder nachts, weniger effizient arbeitet. Stellt die Photovoltaikeinheit 113 zu wenig Energie für den Energieverbrauch der Lasteinheit 111 bereit, wird die Inseleinheit 110 zunächst auf die Energiespeichereinheit 115 zurückgreifen, um dieser Energie zu entnehmen und sie der Lasteinheit 111 zuzuführen. Reicht die in der Speichereinheit 115 gespeicherte Energie nicht aus, um den Energiebedarf der Lasteinheit 111 zu decken, müsste die Inseleinheit 110 auf Energie aus dem öffentlichen Energienetz zurückgreifen, welche teurer, ineffizienter und ökologisch bedenklicher hergestellt ist. Erfindungsgemäß kann der Zugriff auf das öffentliche Energienetz dadurch verhindert werden, dass die Inseleinheit 110 ihren Energiebedarf aus ihren virtuellen Energieerzeugungseinheiten 123, 133 und/oder ihren virtuellen Speichereinheiten 125, 135 decken kann. Erfindungsgemäß sendet die Inseleinheit 110 mittels der Schnittstelleneinheit 116 eine Energieentnahmeanfrage an zumindest eine der anderen Inseleinheiten 120, 130. Hat eine der anderen Inseleinheiten 120, 130 einen Energieüberschuss, wird diese entsprechende andere Inseleinheit 120, 130 die Energieentnahmeanfrage der Inseleinheit 110 beantworten und zulassen, dass die Inseleinheit 110 aus der jeweiligen Energiespeichereinheit 125, 135 und/oder der Photovoltaikanlage 123, 133 Energie entnimmt.

Erfindungsgemäß können die Inseleinheiten 110, 120, 130 untereinander mittels der Schnittstelleneinheiten 116, 126, 136 kommunizierten Energieentnahmeanfragen und Energiespeicheranfragen Energie untereinander austauschen und einen Zugriff auf das öffentliche Energienetz weitgehend vermeiden.

Die Verwaltungseinheit 140 ist ausgestaltet, um eine Energiespeicheranfrage und/oder Energieentnahmeanfrage an eine der Inseleinheiten 110, 120, 130 zu senden. Bei einem Inselenergienetz mit einer besonders großen Anzahl von Inseleinheiten kann die Verwaltungseinheit 140 auch mit einer Vielzahl von Inseleinheiten 110, 120, 130 in Kommunikation stehen. Erfindungsgemäß ist wenigstens eine Inseleinheit 110 des Inselenergienetzes ausgestaltet, um eine Anfrage an eine weitere Inseleinheit 120, 130 zu senden bzw. weiterzuleiten, um so eine Kommunikationsverkürzung in Form der Virtualisierung herbeizuführen. Die Verwaltungseinheit 140 kann dann beispielsweise als Schnittstelle zwischen Inselenergienetzen oder einem Inselenergienetz mit dem öffentlichen Energienetz dienen.

Erfindungsgemäß werden viele kleine Energieerzeugungs- und Verbrauchsanlagen (Inseleinheiten) zu einer großen Anlage eines virtuellen Kraftwerks zusammengefasst. Um dem erfindungsgemäßen virtuellen Kraftwerk Energie zu entnehmen oder diesem Energie zuzuführen, reicht erfindungsgemäß die Sendung oder der Empfang einer Anfrage von einer der Inseleinheiten innerhalb des erfindungsgemäßen Inselenergienetzes aus. Die Kommunikation mit dem Inselenergienetz wird so erheblich erleichtert und effizienter gestaltet.

Der Aufbau der Kommunikation zwischen den Inseleinheiten 110, 120, 130 kann erfindungsgemäß in Form einer direkten Konfiguration erfolgen, in der jeder Inseleinheit 110 durch das Inselenergienetz, z.B. die Verwaltungseinheit 140, mitgeteilt wird, mit welchen Inseleinheiten 120, 130 es sich virtualisieren soll. Auch ist es möglich, dass die Inseleinheit 110 eine aktive Suche im Inselenergienetz oder in einem Inselenergiesubnetz veranlasst, indem Inseleinheit 110 ein Rundsteuersignal innerhalb des Inselenergienetzes versendet, um weitere Inseleinheiten 120, 130 zu identifizieren. Ferner ist es auch bevorzugt, dass die Inseleinheit 110 eine aktive Suche z.B. im Internet oder über ein Funknetz veranlasst, um Identifikationsinformationen zu empfangen, die angeben, mit welchen Inseleinheiten 120, 130 sie sich verbinden soll.

Auch wenn die vorstehende Beschreibung ein erfindungsgemäßes Inselenergienetz mit drei Inseleinheiten erläutert, so ist es im Sinne der Erfindung, dass jedwede beliebige Anzahl von Inseleinheiten in dem Inselenergienetz enthalten sein kann.

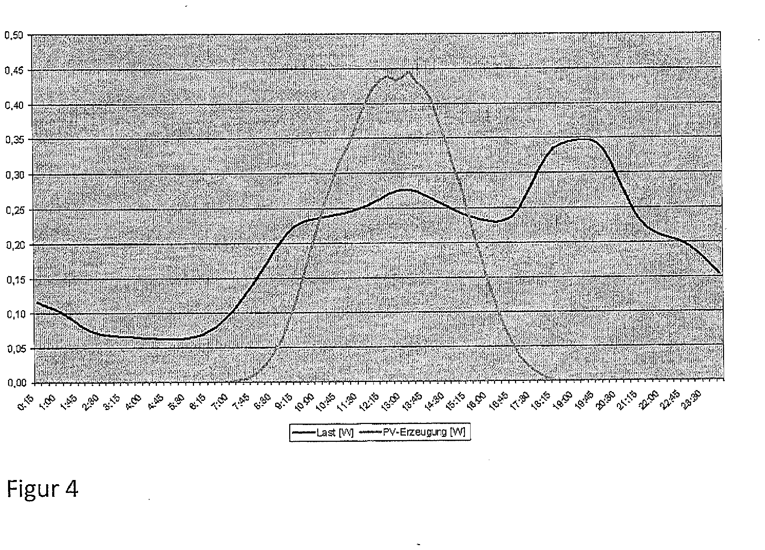

Die Einspeise- und Verbrauchskurven eines typischen Haushalts verlaufen nicht parallel (Figur 4). Will man den Eigenverbrauch maximieren, ist entweder eine Umstellung der Verbrauchsbedingungen oder ein geeignetes Speichermedium erforderlich. Hinzu kommt, dass in Deutschland ein dreiphasiges Netz mit einer Vielzahl dreiphasig betriebener Endgeräte vorliegt, während die Einspeisung von Endverbraucheranlagen überwiegend mit einphasigen Stringwechselrichtern erfolgt.

Figur 4 zeigt eine mittlere PV-(Photovoltaik-) Stromproduktion und mittlere Last eines 4 Personenhaushaltes. Deutlich ist der Überschuss an PV-Leistung in der Mittagszeit zu erkennen.

Um dennoch den Eigenverbrauch zu optimieren, besteht ein erfindungsgemäßer Ansatz darin, nicht mehr zu versuchen, produzierte PV-Energie unmittelbar und vollständig in das Netz einzuspeisen, sondern stets nur genau so viel PV-Strom in das Netz einspeisen, wie gerade verbraucht wird und überschüssige PV-Energie zwischenzuspeichern.

Um eine effektive Systemlösung mit Speicherung technisch zu realisieren, gilt es, die Anforderungen an ein solches System zu identifizieren. Hierzu zählen u.a. folgende Forderungen:
- Garantierte Batterielebensdauer von 20 Jahren
- Niedrige Lebensdauerkosten
- Hohe Zyklenfestigkeit der Batterie über die Lebensdauer
- Hoher Gesamtwirkungsgrad von ca. 95 %inklusive Batterie
- Geringe Baugröße, vergleichbar mit einem handelsüblichen Kühlschrank
- Keine Betriebsrisiken
- Hohe Verlässlichkeit über die gesamte Lebensdauer
- 5kWp Maximalleistung
- 5kWh - 8kWh Batteriekapazität
- Maximale Einbauzeit: vier Stunden.

Hocheffiziente Lithium-Ionen Akkumulatoren entsprechen z. B. diesen Anforderungen. Die Größe des zu verwendenden Speichers definiert sich anhand unterschiedlicher Parameter, wie u. a.: Größe der PV-Anlage, Höhe des eigenen Verbrauchs, Sicherheitsbedürfnis des Nutzers, Wirtschaftlichkeit etc.

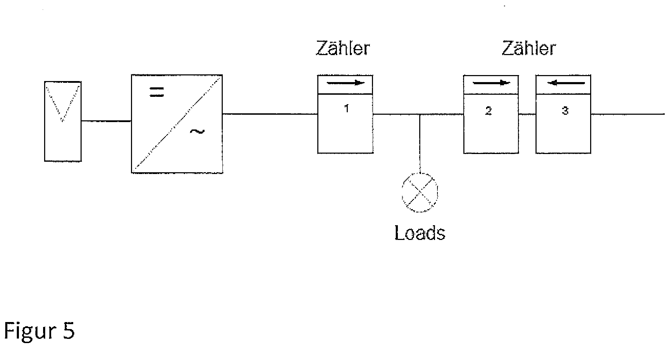

Figur 5 zeigt ein Zählerkonzept zur Bestimmung des Eigenverbrauchs der selbsterzeugten Energie. Die Zähler 2 und 3 können in ein Gerät integriert werden.

Das erfindungsgemäße Inselnetz ist in der Lage, zeitgleich die aktuell verbrauchte Strommenge bedarfsgerecht zur Verfügung zu stellen. Die Energie wird entweder direkt aus der PV·Anlage, aus dem Speicher oder auch aus einer Kombination beider Quellen bereitgestellt. Nur wenn aus diesen Quellen nicht genug Energie zur Verfügung gestellt werden kann, wird auf Netzstrom zurückgegriffen, um beispielsweise kurzfristig ansteigende Bedarfe zu decken. Steht das Netz wegen eines Ausfalls nicht zur Verfügung, wird das System in der Lage sein, erzeugten Strom zu speichern und/oder bei Bedarf als Backup Leistungen bis zu einer definierten Größe aus den bei den Quellen bedarfsgerecht zur Verfügung zu stellen.

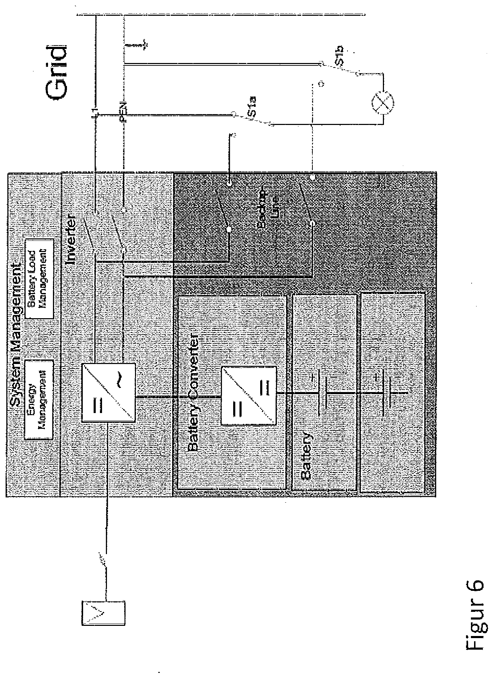

Figur 6 veranschaulicht eine erfindungsgemäße Ausführungsform. Wechselrichter, Batterieladegerät und Batteriemodule werden in einem Gerät integriert. Zusätzlich wird eine Backup-Line zur Verfügung gestellt, die im Fall eines Stromausfalls Lasten bis zur definierten Größe bedarfsgerecht versorgen kann.

Figur 6 zeigt eine schematische Darstellung eines erfindungsgemäßen Inselnetzes für die Optimierung des PV-gestützten Eigenverbrauchs. Das Inselnetz integriert Wechselrichter, Batteriemodule und Batterieladegerät in einem Gerät. Neben dem normalen Anschluss für die Einspeisung wird ein weiterer Anschluss für die Notversorgung bereitgestellt. Die Schalter S1a und S1b dienen der Zu-und Abschaltung von Lasten an die Notversorgung und können vom Energiemanagement bedient werden

Des Weiteren weist die erfindungsgemäße Inseleinheit ein intelligentes Systemmanagement auf, welches die Energieflüsse und die Funktion der Komponenten regelt und überwacht. Hierzu misst das Energiemanagement die aktuelle Last auf allen drei Phasen und ermittelt so die vom Wechselrichter bereitzustellende Last.

Parallel hierzu speichert der Battery Converter, ein Laderegler mit einem sehr hohen Wirkungsgrad, überflüssigen PV-Strom in die Batterien, bzw. entnimmt der Batterie den Differenzbetrag aus PV-Strom und einzuspeisender Leistung. Die Inseleinheit kompensiert die hoch dynamischen Leistungsschwankungen, die für PV-Strom kennzeichnend ist und unterstützt den Wechselrichter bei der Bereitstellung der exakten Leistung.

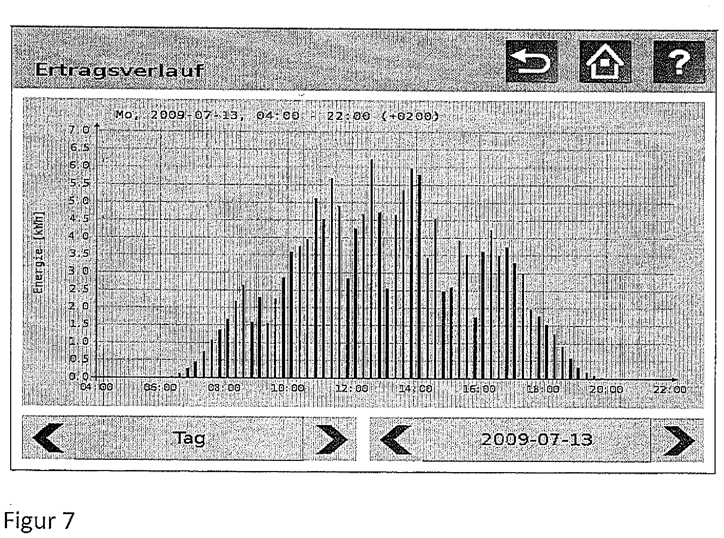

Das System ist mit einem Display ausgestattet, um dem Nutzer und Installateur wichtige Informationen über den produzierten, gespeicherten und selbst verbrauchten Strom darstellen zu können (Figur 7). So ermöglicht das System eine hohe Transparenz bezüglich der Performance der eigenen Anlage und gibt dem Installateur wichtige Hinweise über die Systemperformance und unterstützt ihn bei eventuell notwendigen Wartungsarbeiten.

Figur 7 zeigt Informationen über die Anlagenperformanz liefert ein Display Die vorliegende Erfindung weist eine Vielzahl von Lösungsansätzen auf. die dem Inseleinheitsnutzer völlig neue Wege des intelligenten Energiemanagements aufweisen. Das System ist obendrein nach dem Bausatzprinzip konstruiert, so dass der Einbau durch den Fachinstallateur problemlos erfolgen kann. Auch bestehende PV-anlagen sind ohne weiteres nachrüstbar.

## Patentansprüche

1. Inseleinheit (110) für ein Inselenergienetz (100) mit
- einer Photovoltaikeinheit (113), zum Erzeugen von Energie aus erneuerbaren Ressourcen,
- einer Energiespeichereinheit (115) zum Speichern von Energie,
- einer Lastanschlusseinheit zum Verbinden der Inseleinheit (110) mit einer Lasteinheit (111) zum Verbrauchen von Energie,
- einer Netzeinheit (114), insbesondere einer Wechselrichtereinheit, zum Verbinden der Inseleinheit (110) mit einem Energienetz, zum Entnehmen von Energie aus dem Energienetz und zum Zuführen von Energie in das Energienetz, und
- einer Schnittstelleneinheit (116) zum Kommunizieren einer Energieentnahmeanfrage und/oder Energiespeicheranfrage mit einer zweiten Inseleinheit (120, 130), welche zum Senden der Energiespeicheranfrage zur Speicherung von Energie in der zweiten Inseleinheit (120, 130) an die zweite Inseleinheit (120, 130) ausgestaltet ist,
**dadurch gekennzeichnet,**
**dass** die Inseleinheit (110) ein Energiemanagement aufweist, das die aktuelle Last auf allen drei Phasen misst.

2. Inseleinheit (110) nach Anspruch 1, wobei die Schnittstelleneinheit (116) zum Empfangen der Energieentnahmeanfrage zur Entnahme von Energie aus der Inseleinheit (110) von der zweiten Inseleinheit (120, 130),
zum Senden der Energieentnahmeanfrage zur Entnahme von Energie aus der zweiten Inseleinheit (120, 130) an die zweite Inseleinheit (120, 130), und/oder
zum Empfangen der Energiespeicheranfrage zur Speicherung von Energie in der Inseleinheit (110) von der zweiten Inseleinheit (120, 130).

3. Inseleinheit (110) nach Anspruch 1 oder 2, wobei die Schnittstelleneinheit (116) zum Weiterleiten der Energieentnahmeanfrage und/oder der Energiespeicheranfrage an die zweite Inseleinheit (120, 130) ausgestaltet ist.

4. Inseleinheit (110) nach einem der vorstehenden Ansprüche, wobei die Inseleinheit (110) ferner ausgestaltet ist, um die Energieentnahmeanfrage und/oder Energiespeicheranfrage von einer Verwaltungseinheit (140) des Inselenergienetzes (100) zu empfangen.

5. Inseleinheit (110) nach einem der vorstehenden Ansprüche, wobei die Energiespeichereinheit (115) ausgestaltet ist, um Energie in Antwort auf eine Energiespeicheranfrage zu speichern.

6. Inseleinheit (110) nach einem der vorstehenden Ansprüche, wobei die Inseleinheit (110) ausgestaltet ist, um Energie, insbesondere aus der Energiespeichereinheit (115) und/oder von der Energieerzeugungseinheit (113), in Antwort auf eine Energieentnahmeanfrage an das Inselenergienetz (100) abzugeben.

7. Inseleinheit (110) nach einem der vorstehenden Ansprüche, wobei die Inseleinheit (110) ausgestaltet ist, um eine Identifikationsinformation, die die zweite Inseleinheit (120, 130) identifiziert, von dem Inselenergienetz (100) zu empfangen, und die Schnittstelleneinheit (116) ausgestaltet ist, um mit der identifizierten zweiten Inseleinheit (120, 130) zu kommunizieren.

8. Inseleinheit (110) nach einem der vorstehenden Ansprüche, wobei die Inseleinheit (110) ausgestaltet ist, um eine Identifikationsinformationsanfrage an das Inselenergienetz (100) zu senden.

9. Inselenergienetz (100) mit
einer Inseleinheit (110) nach einem der vorstehenden Ansprüche, und einer Verwaltungseinheit (140) zum Kommunizieren einer Energieentnahmeanfrage und/oder Energiespeicheranfrage mit der Inseleinheit (100).

10. Inselenergienetz (100) nach Anspruch 9, ferner mit
einer zweiten Inseleinheit (120, 130), wobei die zweite Inseleinheit (120, 130) aufweist
eine Energieerzeugungseinheit (123, 323), insbesondere einer Photovoltaikeinheit, zum Erzeugen von Energie aus erneuerbaren Ressourcen,
eine Energiespeichereinheit (125, 135) zum Speichern von Energie,
eine Lastanschlusseinheit zum Verbinden der zweiten Inseleinheit (120, 130) mit einer Lasteinheit (121, 131) zum Verbrauchen von Energie,
eine Netzeinheit (124, 134), insbesondere einer Wechselrichtereinheit, zum Verbinden der zweiten Inseleinheit (120, 130) mit einem Energienetz, zum Entnehmen von Energie aus dem Energienetz und zum Zuführen von Energie in das Energienetz, und
eine Schnittstelleneinheit (126, 136) zum Kommunizieren einer Energieentnahmeanfrage und/oder Energiespeicheranfrage mit der Inseleinheit (110).

11. Verfahren zum Steuern eines Inselenergienetzes (100) nach Anspruch 10, mit dem Schritt
Kommunizieren der Energieentnahmeanfrage und/oder Energiespeicheranfrage zwischen der Inseleinheit (100) und der zweiten Inseleinheit (120, 130).

12. Verfahren nach Anspruch 11, mit dem Schritt
Senden einer Energieentnahmeanfrage und/oder Energiespeicheranfrage von der Verwaltungseinheit (140) an die Inseleinheit (110).

13. Verfahren nach Anspruch 11 oder 12, wobei der Schritt des Kommunizierens umfasst
Empfangen der Energieentnahmeanfrage zur Entnahme von Energie aus der Inseleinheit (110) an der Inseleinheit (110) von der zweiten Inseleinheit (120, 130),
Senden der Energieentnahmeanfrage zur Entnahme von Energie aus der zweiten Inseleinheit (120, 130) von der Inseleinheit (110) an die zweite Inseleinheit (120, 130),
Empfangen der Energiespeicheranfrage zur Speicherung von Energie in der Inseleinheit (110) an der Inseleinheit (110) von der zweiten Inseleinheit (120, 130),
Senden der Energiespeicheranfrage zur Speicherung von Energie in der zweiten Inseleinheit (120, 130) von der Inseleinheit (110) an die zweite Inseleinheit (120, 130), und/oder
Weiterleiten der Energieentnahmeanfrage und/oder der Energiespeicheranfrage von der Inseleinheit (110) an die zweite Inseleinheit (120, 130).

14. Verfahren nach einem der Ansprüche 11 bis 13, ferner mit dem Schritt Auswählen der Inseleinheit (110), an die die Verwaltungseinheit (140) die Energieentnahmeanfrage und/oder Energiespeicheranfrage sendet, gemäß einer Priorisierungsliste, die eine priorisierte Rangfolge der Inseleinheit (110) und der zweiten Inseleinheit (120, 130) repräsentiert, und/oder gemäß einer Prädiktionsliste, die eine prädiktionierte Rangfolge der Inseleinheit (110) und der zweiten Inseleinheit (120, 130) repräsentiert.

15. Verfahren nach einem der Ansprüche 11 bis 14, ferner mit dem Schritt Auswählen der zweiten Inseleinheit (120), mit der die Inseleinheit (110) kommuniziert, gemäß einer Priorisierungsliste, die eine priorisierte Rangfolge der zweiten Inseleinheit (120) und einer dritten Inseleinheit (130) repräsentiert, und/oder gemäß einer Prädiktionsliste, die eine prädiktionierte Rangfolge der zweiten Inseleinheit (120) und einer dritten Inseleinheit (130) repräsentiert.

## Claims

1. Isolated unit (110) for an isolated energy network (100), having
- a photovoltaic unit (113) for generating energy from renewable resources,
- an energy storage unit (115) for storing energy,
- a load connection unit for connecting the isolated unit (110) to a load unit (111) for consuming energy,
- a network unit (114), in particular an inverter unit, for connecting the isolated unit (110) to an energy network for the purpose of withdrawing energy from the energy network and for the purpose of supplying energy to the energy network, and
- an interface unit (116) for communicating an energy withdrawal request and/or an energy storage request to a second isolated unit (120, 130) which is configured to transmit the energy storage request to store energy in the second isolated unit (120, 130) to the second isolated unit (120, 130),
**characterized**
**in that** the isolated unit (110) has an energy management system which measures the current load on all three phases.

2. Isolated unit (110) according to Claim 1, wherein the interface unit (116)
to receive the energy withdrawal request to withdraw energy from the isolated unit (110) from the second isolated unit (120, 130),
to transmit the energy withdrawal request to withdraw energy from the second isolated unit (120, 130) to the second isolated unit (120, 130), and/or
to receive the energy storage request to store energy in the isolated unit (110) from the second isolated unit (120, 130).

3. Isolated unit (110) according to Claim 1 or 2, wherein the interface unit (116) is configured to forward the energy withdrawal request and/or the energy storage request to the second isolated unit (120, 130).

4. Isolated unit (110) according to one of the preceding claims, wherein the isolated unit (110) is also configured to receive the energy withdrawal request and/or energy storage request from a management unit (140) of the isolated energy network (100) .

5. Isolated unit (110) according to one of the preceding claims, wherein the energy storage unit (115) is configured to store energy in response to an energy storage request.

6. Isolated unit (110) according to one of the preceding claims, wherein the isolated unit (110) is configured to deliver energy, in particular from the energy storage unit (115) and/or from the energy generation unit (113), to the isolated energy network (100) in response to an energy withdrawal request.

7. Isolated unit (110) according to one of the preceding claims, wherein the isolated unit (110) is configured to receive an item of identification information, which identifies the second isolated unit (120, 130), from the isolated energy network (100), and the interface unit (116) is configured to communicate with the identified second isolated unit (120, 130).

8. Isolated unit (110) according to one of the preceding claims, wherein the isolated unit (110) is configured to transmit an identification information request to the isolated energy network (100).

9. Isolated energy network (100) having an isolated unit (110) according to one of the preceding claims, and
a management unit (140) for communicating an energy withdrawal request and/or an energy storage request to the isolated unit (100).

10. Isolated energy network (100) according to Claim 9, also having
a second isolated unit (120, 130), wherein the second isolated unit (120, 130) has an energy generation unit (123, 323), in particular a photovoltaic unit, for generating energy from renewable resources,
an energy storage unit (125, 135) for storing energy,
a load connection unit for connecting the second isolated unit (120, 130) to a load unit (121, 131) for consuming energy,
a network unit (124, 134), in particular an inverter unit, for connecting the second isolated unit (120, 130) to an energy network for the purpose of withdrawing energy from the energy network and for the purpose of supplying energy to the energy network, and
an interface unit (126, 136) for communicating an energy withdrawal request and/or an energy storage request to the isolated unit (110).

11. Method for controlling an isolated energy network (100) according to Claim 10, having the step of communicating the energy withdrawal request and/or energy storage request between the isolated unit (100) and the second isolated unit (120, 130).

12. Method according to Claim 11, having the step of transmitting an energy withdrawal request and/or an energy storage request from the management unit (140) to the isolated unit (110).

13. Method according to Claim 11 or 12, wherein the communicating step comprises
receiving the energy withdrawal request to withdraw energy from the isolated unit (110) from the second isolated unit (120, 130) at the isolated unit (110), transmitting the energy withdrawal request to withdraw energy from the second isolated unit (120, 130) to the second isolated unit (120, 130) from the isolated unit (110),
receiving the energy storage request to store energy in the isolated unit (110) from the second isolated unit (120, 130) at the isolated unit (110), transmitting the energy storage request to store energy in the second isolated unit (120, 130) to the second isolated unit (120, 130) from the isolated unit (110), and/or
forwarding the energy withdrawal request and/or the energy storage request from the isolated unit (110) to the second isolated unit (120, 130).

14. Method according to one of Claims 11 to 13, also having the step of
selecting the isolated unit (110), to which the management unit (140) transmits the energy withdrawal request and/or energy storage request, according to a prioritization list representing a prioritized ranking of the isolated unit (110) and the second isolated unit (120, 130), and/or according to a prediction list representing a predicted ranking of the isolated unit (110) and the second isolated unit (120, 130).

15. Method according to one of Claims 11 to 14, also having the step of
selecting the second isolated unit (120), with which the isolated unit (110) communicates, according to a prioritization list representing a prioritized ranking of the second isolated unit (120) and a third isolated unit (130), and/or according to a prediction list representing a predicted ranking of the second isolated unit (120) and a third isolated unit (130).

## Revendications

1. Unité d'îlot (110) destinée à un réseau d'énergie d'îlots (100) et comprenant
- une unité photovoltaïque (113) destinée à générer de l'énergie à partir de ressources renouvelables,
- une unité de stockage d'énergie (115) destinée à stocker de l'énergie,
- une unité de raccordement de charge destinée à relier l'unité d'îlot (110) à une unité de charge (111) pour la consommation d'énergie,
- une unité de réseau (114), en particulier une unité d'onduleur, destinée à relier l'unité d'îlot (110) à un réseau d'énergie pour prélever de l'énergie sur le réseau d'énergie et pour amener de l'énergie au réseau d'énergie, et
- une unité d'interface (116) destinée à communiquer une demande de prélèvement d'énergie et/ou une demande de stockage d'énergie et comprenant une deuxième unité d'îlot (120, 130) qui est conçue pour envoyer la demande de stockage d'énergie, afin de stocker de l'énergie dans la deuxième unité d'îlot (120, 130), à la deuxième unité d'îlot (120, 130),
**caractérisée en ce que**
l'unité d'îlot (110) comporte un système de gestion d'énergie qui mesure la charge actuelle sur les trois phases.

2. Unité d'îlot (110) selon la revendication 1, l'unité d'interface (116)
pour recevoir de la deuxième unité d'îlot (120, 130) la demande de prélèvement d'énergie afin de prélever l'énergie sur l'unité d'îlot (110),
pour envoyer à la deuxième unité d'îlot (120, 130) la demande de prélèvement d'énergie afin de prélever de l'énergie sur la deuxième unité d'îlot (120, 130), et/ou
pour recevoir de la deuxième unité d'îlot (120, 130) la demande de stockage d'énergie afin de stocker de l'énergie dans l'unité d'îlot (110).

3. Unité d'îlot (110) selon la revendication 1 ou 2, l'unité d'interface (116) étant conçue pour transmettre à la deuxième unité d'îlot (120, 130) la demande de prélèvement d'énergie et/ou la demande de stockage d'énergie.

4. Unité d'îlot (110) selon l'une des revendications précédentes, l'unité d'îlot (110) étant en outre conçue pour recevoir d'une unité de gestion (140) du réseau d'énergie d'îlots (100) la demande de prélèvement d'énergie et/ou la demande de stockage d'énergie.

5. Unité d'îlot (110) selon l'une des revendications précédentes, l'unité de stockage d'énergie (115) étant conçue pour stocker de l'énergie en réponse à une demande de stockage d'énergie.

6. Unité d'îlot (110) selon l'une des revendications précédentes, l'unité d'îlot (110) étant conçue pour délivrer au réseau d'énergie d'îlots (100) de l'énergie, notamment prise sur l'unité de stockage d'énergie (115) et/ou générée par l'unité de génération d'énergie (113), en réponse à une demande de prélèvement d'énergie.

7. Unité d'îlot (110) selon l'une des revendications précédentes, l'unité d'îlot (110) étant conçue pour recevoir du réseau d'énergie d'îlots (100) une information d'identification qui identifie la deuxième unité d'îlot (120, 130) et l'unité d'interface (116) étant conçue pour communiquer avec la deuxième unité d'îlot identifiée (120, 130).

8. Unité d'îlot (110) selon l'une des revendications précédentes, l'unité d'îlot (110) étant conçue pour envoyer au réseau d'énergie d'îlots (100) une demande d'information d'identification.

9. Réseau d'énergie d'îlots (100) comprenant une unité d'îlot (110) selon l'une des revendications précédentes, et une unité de gestion (140) destinée à communiquer une demande de prélèvement d'énergie et/ou une demande de stockage d'énergie à l'unité d'îlot (100) .

10. Réseau d'énergie d'îlots (100) selon la revendication 9, comprenant en outre une deuxième unité d'îlot (120, 130), la deuxième unité d'îlot (120, 130) comportant
une unité de génération d'énergie (123, 323), en particulier une unité photovoltaïque, destinée à générer de l'énergie à partir de ressources renouvelables,
une unité de stockage d'énergie (125, 135) destinée à stocker de l'énergie,
une unité de raccordement de charge destinée à relier la deuxième unité d'îlot (120, 130) à une unité de charge (121, 131) pour la consommation d'énergie,
une unité de réseau (124, 134), en particulier une unité d'onduleur, destinée à relier la deuxième unité d'îlot (120, 130) à un réseau d'énergie, à prélever de l'énergie sur le réseau d'énergie et à amener de l'énergie au réseau d'énergie, et
une unité d'interface (126, 136) destinée à communiquer une demande de prélèvement d'énergie et/ou une demande de stockage d'énergie à l'unité d'îlot (110).

11. Procédé de commande d'un réseau d'énergie d'îlots (100) selon la revendication 10, ledit procédé comprenant l'étape suivante :
communiquer la demande de prélèvement d'énergie et/ou la demande de stockage d'énergie entre l'unité d'îlot (100) et la deuxième unité d'îlot (120, 130).

12. Procédé selon la revendication 11, comprenant l'étape suivante :
envoyer une demande de prélèvement d'énergie et/ou une demande de stockage d'énergie de l'unité de gestion (140) à l'unité d'îlot (110).

13. Procédé selon la revendication 11 ou 12, l'étape de communication comprenant les opérations suivantes recevoir de la deuxième unité d'îlot (120, 130) la demande de prélèvement d'énergie afin de prélever de l'énergie sur l'unité d'îlot (110) au niveau de l'unité d'îlot (110),
envoyer de l'unité d'îlot (110) à la deuxième unité d'îlot (120, 130) la demande de prélèvement d'énergie afin de prélever de l'énergie sur la deuxième unité d'îlot (120, 130),
recevoir de la deuxième unité d'îlot (120, 130) la demande de stockage d'énergie afin de stocker de l'énergie dans l'unité d'îlot (110) au niveau de l'unité d'îlot (110),
envoyer de l'unité d'îlot (110) à la deuxième unité d'îlot (120, 130) la demande de stockage d'énergie afin de stocker de l'énergie dans la deuxième unité d'îlot (120, 130), et/ou
transmettre de l'unité d'îlot (110) à la deuxième unité d'îlot (120, 130) la demande de prélèvement d'énergie et/ou la demande de stockage d'énergie.

14. Procédé selon l'une des revendications 11 à 13, comprenant en outre l'étape suivante :
sélectionner l'unité d'îlot (110) à laquelle l'unité de gestion (140) envoie la demande de prélèvement d'énergie et/ou la demande de stockage d'énergie, suivant une liste de priorisation qui représente un ordre priorisé de l'unité d'îlot (110) et de la deuxième unité d'îlot (120, 130) et/ou suivant une liste de prédiction qui représente un ordre prédit de l'unité d'îlot (110) et de la deuxième unité d'îlot (120, 130).

15. Procédé selon l'une des revendications 11 à 14, comprenant en outre l'étape suivante :
sélectionner la deuxième unité d'îlot (120), avec laquelle l'unité d'îlot (110) communique, suivant une liste de priorisation qui représente un ordre priorisé de la deuxième unité d'îlot (120) et d'une troisième unité d'îlot (130) et/ou suivant une liste de prédiction qui représente un ordre prédit de la deuxième unité d'îlot (120) et d'une troisième unité d'îlot (130).
